# EUROPÄISCHE PATENTANMELDUNG

(11) **EP 0 810 543 A1**
(43) Veröffentlichungstag der Anmeldung: **03.12.1997**
(21) Anmeldenummer: 96107902.7
(22) Anmeldetag: 17.05.1996
(51) Int. Cl.: G06K 11/18

(54) **Gerät zur Betätigung von Cursortasten**

(71) Anmelder: Roessler, Mark, 73342 Bad Ditzenbach (DE)
(72) Erfinder: Roessler, Mark, 73342 Bad Ditzenbach (DE)
(74) Vertreter: Steil, Christian, Dipl.-Ing.

(57) **Zusammenfassung**

Es wird ein Gerät zur Betätigung der T-förmig angeordneten Cursortasten (6-9) einer Tastatur (1) mittels eines Hebels (20; 84) vorgeschlagen. Das Betätigungsgerät weist ein Gehäuse (12; 81) auf, aus dem sich der Hebel (20; 84) erstreckt. An dem Gehäuse (12; 81) ist eine Betätigungseinrichtung (32-35, 48-52; 86) gelagert, die mit dem Hebel (20; 84) verbunden ist. Mit der Betätigungseinrichtung (32-35, 48-52; 96) werden Hebelbewegungen in Betätigungen der Cursortasten (6-9) umgesetzt, wobei die Betätigungseinrichtung (32-35, 48-52; 86) vier, den Cursortasten (6-9) zugeordnete Arme aufweist. Die Betätigungseinrichtung (32-35, 48-52; 86) ist so ausgebildet, daß der Betrag der Auslenkung des Hebels (20; 84) zur Betätigung jeder der vier Cursortasten (6-9) etwa gleich ist.

## Beschreibung

Die vorliegende Erfindung betrifft ein Gerät zur Betätigung der T-förmig angeordneten Cursortasten einer Tastatur mittels eines Hebels, mit einem Gehäuse, aus dem sich der Hebel erstreckt, und einer an dem Gehäuse gelagerten und mit dem Hebel verbundenen Betätigungseinrichtung zur Umsetzung von Hebelbewegungen in Betätigungen der Cursortasten, wobei die Betätigungseinrichtung vier, den Cursortasten zugeordnete Arme aufweist.

Ein solches Gerät ist aus der DE-A-44 28 671 bekannt.

Das bekannte Gerät wird mit seinem Gehäuse auf die Cursortasten einer handelsüblichen Computertastatur aufgesetzt. An dem Gehäuse ist ein Rahmen um eine erste Achse schwenkbar gelagert. An dem Rahmen sind außen zwei gegenüberliegende Arme angebracht zur Betätigung der Cursortasten "links" und "rechts". In dem Rahmen ist ein Bauelement um eine zweite, zur ersten Achse quer ausgerichtete Achse gelagert, um die Cursortasten "hoch" und "runter" betätigen zu können. Die Betätigungseinrichtung dieses bekannten Gerätes ist somit nach Art eines Kardangelenkes aufgebaut und erlaubt nicht nur das Betätigen der einzelnen vier Cursortasten sondern auch das gleichzeitige Betätigen von zwei Cursortasten, z.B. "links" und "hoch", um einen diagonalen Lauf des Cursors einzuleiten.

Dieses Gerät arbeitet zwar vom Prinzip her zufriedenstellend, es hat sich jedoch gezeigt, daß die Handhabbarkeit des Gerätes insbesondere zur Verwendung des Cursors bei Computerspielen verbesserungsbedürftig ist. Des weiteren baut das Gerät relativ hoch, so daß es bei Computeranwendungen als störend empfunden wird, bei denen eine Cursorsteuerung nicht notwendig ist, z.B. bei der Eingabe von Ziffern über den numerischen Tastenblock der Tastatur.

Vor diesem Hintergrund ist es die Aufgabe der vorliegenden Erfindung, ein Gerät zur Betätigung der Cursortasten einer Tastatur mittels eines Hebels anzugeben, dessen Handhabbarkeit verbessert ist und das flacher baut.

Diese Aufgabe wird bei dem eingangs genannten Gerät zur Betätigung der T-förmig angeordneten Cursortasten einer Tastatur mittels eines Hebels dadurch gelöst, daß die Betätigungseinrichtung so ausgebildet ist, daß der Betrag der Auslenkung des Hebels zur Betätigung jeder der vier Cursortasten etwa gleich ist.

Durch diese Maßnahme ergibt sich eine hervorragende Handhabbarkeit des Gerätes. Denn die Betätigungseinrichtung kann die an sich nicht punktsymmetrisch angeordneten Cursortasten durch eine punktsymmetrische Auslenkung des Hebels betätigen. Mit anderen Worten ist trotz der nicht punktsymmetrischen Anordnung der Cursortasten die Auslenkung des Hebels zur Betätigung z.B. der Cursortaste "links" und der Cursortaste "hoch" annähernd gleich. Hierdurch ergibt sich für den Anwender das Gefühl, er würde einen herkömmlichen "Joystick" betätigen, bei dem die Auslenkung entlang beider Koordinatenachsen ebenfalls identisch ist.

Bei dem aus der DE-A-44 28 671 bekannten Gerät ist die Auslenkung zur Betätigung der Cursortasten "hoch" und "runter" etwa doppelt so groß wie die zur Betätigung der Cursortasten "links" und "rechts", so daß die Handhabbarkeit insbesondere bei der Verwendung zur Cursorsteuerung bei Computerspielen unbefriedigend ist.

Zudem läßt sich durch die erfindungsgemäße Ausgestaltung der Betätigungseinrichtung die Bauhöhe des Gerätes reduzieren. Denn die Angleichung der Auslenkungsbeträge führt dazu, daß zumindest ein Paar von Armen der Betätigungseinrichtung nicht so weit hochschwenkt wie bei dem oben beschriebenen, bekannten Gerät.

Die Aufgabe wird somit vollkommen gelöst.

Vorzugsweise weisen die Cursortasten ein erstes Paar benachbarter Cursortasten und ein Zweites Paar von Cursortasten auf, die durch eine der Cursortasten des ersten Paars voneinander getrennt sind, wobei die Betätigungseinrichtung zwei Arme aufweist, die sich bis zu einem jeweiligen Randabschnitt des zweiten Paars von Cursortasten benachbart der einen Taste des ersten Cursortastenpaars erstrecken.

Durch diese Maßnahme wird auf konstruktiv besonders einfache Weise erreicht, daß der Betrag der Auslenkung zur Betätigung des zweiten Cursortastenpaars (z.B. Cursortasten "links" und "rechts") sich gegenüber dem Stand der Technik vergrößert, da die diesem Cursortastenpaar zugeordneten Arme kürzer sind als im Stand der Technik.

Es ist weiterhin bevorzugt, wenn die Cursortasten ein erstes Paar benachbarter Cursortasten und ein zweites Paar von Cursortasten aufweisen, die durch eine der Cursortasten des ersten Paars voneinander getrennt sind, und wenn die Betätigungseinrichtung zwei Arme aufweist, die sich bis zu einem jeweiligen Randabschnitt des ersten Cursortastenpaars entfernt von der jeweiligen anderen Cursortaste des ersten Cursortastenpaars erstrecken.

Durch diese Maßnahme wird auf konstruktiv einfache Weise erreicht, daß sich der Betrag der Auslenkung zur Betätigung des ersten Cursortastenpaars (z.B. Cursortasten "hoch" und "runter") gegenüber dem Stand der Technik verringert, denn die Länge der Arme zur Betätigung des ersten Cursortastenpaars ist größer als im Stand der Technik.

Durch Verkürzung der Arme zur Betätigung des zweiten Cursortastenpaars und durch Verlängerung der Arme zur Betätigung des ersten Cursortastenpaars werden die Armlängen aneinander angeglichen. Hierdurch ergibt sich auf konstruktiv einfache Weise, daß der Betrag der Auslenkung des Hebels zur Betätigung jeder der vier Cursortasten etwa gleich ist. Zwar wäre es auch denkbar, eine solche Angleichung der Auslenkungsbeträge allein durch eine Verkürzung des einen Armpaares oder durch eine Verlängerung des anderen Armpaares zu erreichen. Hierbei müßten die Höhen- bzw. Breitenabmessungen des Gerätes insgesamt jedoch vergrößert werden. Durch die Kombination der Verkürzung des einen Armpaares und der Verlängerung des anderen Armpaares läßt sich somit ein besonders kompaktes Cursorbetätigungsgerät herstellen.

Dabei ist es bevorzugt, wenn die dem zweiten Cursortastenpaar zugeordneten Arme der Betätigungseinrichtung maximal 35 %, vorzugsweise maximal 20 % länger sind als die dem ersten Cursortastenpaar zugeordneten Arme.

Gegenüber dem Stand der Technik, bei dem die dem zweiten Cursortastenpaar zugeordneten Arme doppelt so lang, also 100 % länger sind als die dem ersten Cursortastenpaar zugeordneten Arme, ergibt sich hierdurch bereits eine wesentliche Angleichung der Auslenkungsbeträge des Hebels. Da die Hebelauslenkungsbeträge, absolut gesehen, relativ klein sind, nimmt der Anwender die sich ergebenden Auslenkungsunterschiede kaum wahr.

Gemäß einer bevorzugten Ausführungsform weist die Betätigungseinrichtung ein erstes, um eine erste Achse schwenkbares Betätigungsglied und ein zweites, an dem ersten Betätigungsglied um eine zweite, zur ersten Achse im wesentlichen senkrecht ausgerichtete Achse schwenkbar gelagertes Betätigungsglied auf.

Durch diese Ausgestaltung der Betätigungseinrichtung nach der Art eines Kardangelenkes können die Betätigungsvorgänge für die zwei Cursortastenpaare weitgehend voneinander entkoppelt werden. Zudem ist eine derart aufgebaute Betätigungseinrichtung besonders robust und sicher gegen Fehlbetätigungen.

Dabei ist es bevorzugt, wenn der Hebel mit dem zweiten Betätigungsglied starr verbunden ist.

Durch diese Maßnahme ergibt sich ein besonders kompakter Aufbau des Gerätes zur Betätigung der Cursortasten.

Es ist weiterhin bevorzugt, wenn die Betätigungseinrichtung eine Stößeleinrichtung mit vier, den Cursortasten zugeordneten, etwa parallel zur Tastenbetätigungsrichtung an dem Gehäuse beweglich gelagerten Stößeln aufweist, die von den Armen bewegbar sind.

Durch diese Maßnahme wird erreicht, daß die Neigungsbewegungen des Hebels und damit der Arme in senkrechte Bewegungen zur Cursortastenbetätigung umgesetzt werden. Daher wird ein "Verklemmen" der Cursortasten oder ein "Verklemmen" der Arme der Betätigungseinrichtung mit den Cursortasten bei deren Betätigung vermieden. Dies ist im vorliegenden Fall besonders wichtig, da insbesondere die kürzeren Arme sich mit den Cursortasten verklemmen könnten, wenn keine "zwischengeschalteten" Stößel vorgesehen sind.

Dabei ist es bevorzugt, wenn die Stößel so zueinander angeordnet sind, daß sie jeweils mittig mit den Cursortasten ausgerichtet sind.

Durch die mittige Ausrichtung der Stößel mit den Cursortasten wird vollkommen vermieden, daß sich die Cursortasten bei ihrer Betätigung verklemmen.

Es ist weiterhin bevorzugt, wenn die Stößel gegen die Cursortastenbetätigungsrichtung federvorgespannt sind.

Durch diese Maßnahme wird erreicht, daß der Hebel auch bei nicht auf die Cursortasten aufgesetztem Gerät bezüglich des Gehäuses zentriert wird. Zwar wäre es auch denkbar, den Hebel während des Gebrauchs durch die Federvorspannung der Tasten zu zentrieren. Bei nicht auf die Cursortasten aufgesetztem Gerät hätte der Hebel jedoch keine definierte Lage, so daß das Gerät insgesamt weniger funktionell wirkt.

Vorzugsweise sind die Stößel auf der der Betätigungseinrichtung zugewandten Seite flach ausgebildet.

Durch diese Maßnahme wird erreicht, daß die Bauhöhe des Gerätes minimiert werden kann.

Gemäß einer weiteren bevorzugten Ausführungsform sind die Stößel mit einer Bohrung mit Innengewinde versehen, in das Schrauben zur Justierung des Stößelhubs eingeschraubt sind.

Durch die Justierschrauben läßt sich das Gerät ideal an unterschiedliche Tastentypen anpassen. Der Anschlag der Tasten kann optimiert werden.

Dabei ist es bevorzugt, wenn die Stößel mit Durchgangsbohrungen zur Aufnahme der Schrauben versehen sind.

Durch diese Maßnahme läßt sich die Bauhöhe des Gerätes weiter reduzieren und gleichzeitig der Justierbereich vergrößern.

Vorzugsweise sind dabei die dem ersten Cursortastenpaar zugeordneten Arme mit Durchbrechungen versehen, die mit den Durchgangsbohrungen der zugehörigen Stößel ausgerichtet sind.

Durch diese Maßnahme kann erreicht werden, daß die Justierschrauben ohne Beeinträchtigung der Betätigungsfunktion gegenüber den Stößeln nach oben vorstehen können, so daß die Bauhöhe des Gerätes bei Maximierung des Justierbereiches weiter reduziert werden kann.

Es ist weiterhin bevorzugt, wenn die dem zweiten Cursortastenpaar zugeordneten Arme sich nicht über die Durchgangsbohrungen der zugehörigen Stößel erstrecken.

Durch diese Maßnahme kann erreicht werden, daß sich die Justierschrauben dieser Stößel aus diesen heraus erstrecken können, ohne die Funktionsfähigkeit der Betätigungseinrichtung zu beeinträchtigen.

Gemäß einer bevorzugten Ausführungsform weist das Gehäuse ein auf der Tastatur aufliegendes Bodenteil und einen auf dieses aufsetzbaren Deckel auf, der das Bodenteil rastend übergreift.

Durch die Rastverbindung können Bodenteil und Deckel getrennt voneinander hergestellt und nach Montage der Betätigungseinrichtung miteinander verbunden werden. Die Rastmittel wie zum Beispiel Rastnasen können am Deckel oder am Bodenteil vorgesehen sein. Durch die Maßnahme, daß der Deckel das Bodenteil übergreift, ist das Bodenteil bei auf die Tastatur aufgesetztem Gerät für den Anwender nicht sichtbar. Daher können Deckel unterschiedlicher Gestalt und Farbe auf dasselbe Bodenteil aufgesetzt werden, so daß auf konstruktiv einfache Weise unterschiedliche Erscheinungsformen des Gerätes realisiert werden können. Diese Maßnahme wird auch ohne die Angleichung der Hebelauslenkungsbeträge als eigene Erfindung angesehen.

Dabei ist es bevorzugt, wenn in dem Bodenteil Vertiefungen zur Aufnahme von Mitteln zur Befestigung des Gerätes an der Tastatur vorgesehen sind.

Hierdurch wird erreicht, daß die Befestigungsmittel bei auf die Tastatur aufgesetztem Gerät nicht sichtbar sind. Besonders bevorzugt ist es, als Befestigungsmittel zwei sich magnetisch anziehende Teile vorzusehen, wobei ein Teil in der Vertiefung aufgenommen und festgelegt ist und das andere Teil an der Tastatur angebracht wird.

Gemäß einer weiteren bevorzugten Ausführungsform ist der Hebel mit einem Griff versehen, der im Querschnitt länglich ausgebildet ist, wobei der Griff so an dem Hebel angebracht ist, daß seine Längsachse etwa parallel zur Verbindungslinie des benachbart zueinander angeordneten Cursortastenpaars ausgerichtet ist.

Durch diese Maßnahme wird eine subjektiv bessere Handhabbarkeit erreicht. Insbesondere, da selbst bei der erfindungsgemäßen Angleichung der Hebelauslenkungsbeträge der Auslenkungsbetrag zur Betätigung der benachbart zueinander angeordneten Cursortasten noch etwas größer sein kann als der Auslenkungsbetrag zur Betätigung des entfernt voneinander angeordneten Cursortastenpaares, ergibt sich durch den länglichen Querschnitt (z.B. ovalen Querschnitt) subjektiv das Gefühl einer weiteren Angleichung der Hebelauslenkungsbeträge.

Gemäß einer weiteren bevorzugten Ausführungsform weist die Betätigungseinrichtung ein kreuzförmiges Betätigungsglied auf, das starr mit dem Hebel verbunden ist, wobei der Hebel und damit das Betätigungsglied an dem Gehäuse schwenkbar gelagert ist.

Ein solches Gerät zur Cursortastenbetätigung ist konstruktiv besonders einfach aufgebaut und damit kostengünstig zu fertigen.

Dabei ist es bevorzugt, wenn der Hebel an dem Gehäuse durch eine Gummimanschette gelagert ist.

Diese Art der Lagerung ist einerseits besonders kostengünstig und gestattet gleichzeitig, den Hebel in beliebige Richtungen auszulenken und damit jede der Cursortasten oder gleichzeitig zwei der Cursortasten zu betätigen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung von bevorzugten Ausführungsbeispielen unter Bezugnahme auf die Zeichnung. Darin zeigen:
- Fig. 1: eine schematische Draufsicht auf eine herkömmliche Computertastatur;
- Fig. 2: eine Schnittansicht einer Ausführungsform eines erfindungsgemäßen Gerätes zur Betätigung der Cursortasten einer Tastatur;
- Fig. 3: eine Draufsicht auf das Bodenteil des Gerätes von Fig. 2 ohne eingesetzte Stößel;
- Fig. 4: eine Draufsicht auf eine weitere Ausführungsform eines Gerätes zur Betätigung der Cursortasten einer Tastatur; und
- Fig. 5: eine schematische Seitenansicht des Gerätes von Fig. 4.

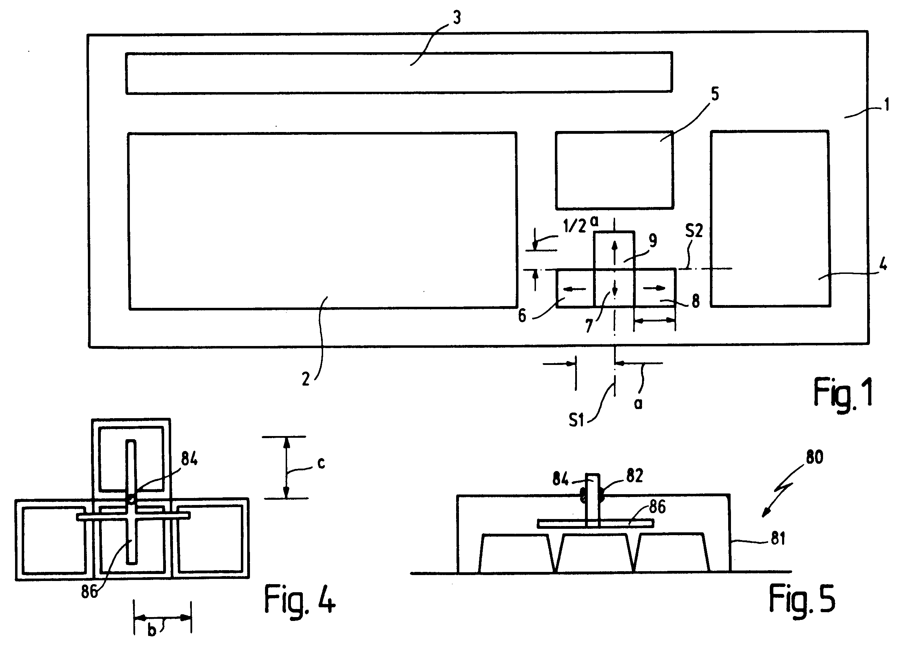

In Fig. 1 ist eine herkömmliche Computertastatur mit der Bezugsziffer 1 versehen. Die Tastatur 1 umfaßt einen alpha-numerischen Tastenblock 2, einen Funktionstastenblock 3, einen numerischen Tastenblock 4, einen Steuertastenblock 5 sowie vier Cursortasten 6, 7, 8, 9. Die Cursortaste 6 dient zum Bewegen des Cursors nach links. Die Cursortaste 8 dient zum Bewegen des Cursors nach rechts. Die Cursortaste 7 dient zum Bewegen des Cursors nach unten, und die Cursortaste 9 dient zum Bewegen des Cursors nach oben. Die Cursortasten 7 und 9 bilden ein erstes Paar benachbarter Cursortasten und sind symmetrisch zu einer Symmetrieachse S2 angeordnet. Die Cursortasten 6 und 8 bilden ein zweites Paar von Cursortasten und sind symmetrisch zu einer Symmetrielinie S1 angeordnet. Zwischen den Cursortasten 6 und 8 liegt die Cursortaste 7. D.h. die Cursortasten sind auf der Tastatur in Form eines auf dem Kopf stehenden T angeordnet.

Die Cursortasten haben alle die gleiche Form. Sie sind generell quadratisch ausgebildet mit einer Kantenlänge a.

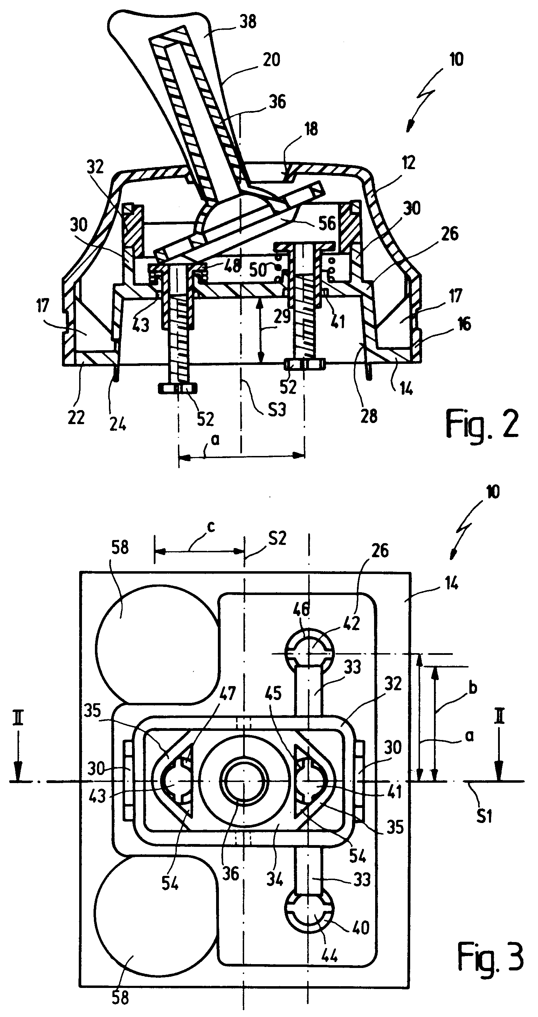

In den Figuren 2 und 3 ist eine erste Ausführungsform eines Gerätes zur Betätigung der T-förmig angeordneten Cursortasten 6-9 einer Tastatur 1 mittels eines Hebels generell mit der Bezugsziffer 10 bezeichnet.

Das Betätigungsgerät 10 weist ein Gehäuse 12 mit einem Bodenteil 14 und einem Deckel 16 auf. An der Innenseite des Deckels 16 sind Rastnasen 17 vorgesehen, die in entsprechende Ausnehmungen an dem Bodenteil 14 angreifen können, so daß der Deckel 16 das Bodenteil 14 rastend übergreift. Alternativ können Rastnasen am Bodenteil und entsprechende Ausnehmungen am Deckel vorgesehen sein.

Im Deckel 16 ist eine zentrale Öffnung 18 vorgesehen, durch die sich ein Hebel 20 erstreckt, mit dem die Cursortasten 6-9 betätigt werden können.

Das Bodenteil 14 weist eine Bodenplatte 22 zur Auflage auf der Tastatur 1 auf. Von der Bodenplatte 22 erstreckt sich ein Steg 24 (oder mehrere Stege 24) nach unten, der so gestaltet ist, daß er bei auf die Tastatur 1 aufgesetzter Bodenplatte 22 in Vertiefungen greift, die zwischen dem Tastaturgehäuse und den Cursortasten 6-9 vorgesehen sind.

Die Bodenplatte 22 weist zentral eine T-förmige erhöhte Tragplatte 26 auf, so daß unterhalb derselben eine generell T-förmige Ausnehmung 28 mit einer lichten Höhe 29 gebildet ist, um die Cursortasten 6-9 aufzunehmen, wenn das Betätigungsgerät 10 auf die Tastatur 1 aufgesetzt wird.

Von der Oberseite der Tragplatte 26 erstrecken sich zwei Ständer 30, an denen ein erstes Betätigungsglied 32 in der Form eines Rahmens um eine Achse schwenkbar gelagert ist, die bei auf die Tastatur 1 aufgesetztem Betätigungsgerät 10 parallel zur Symmetrielinie S1 verläuft. Von dem ersten Betätigungsglied 32 erstrecken sich symmetrisch zur Symmetrielinie S1 zwei Arme 33, die zur Betätigung der Cursortasten 6 und 8 dienen.

An dem ersten Betätigungsglied 32 ist ein zweites Betätigungsglied 34 schwenkbar um eine Achse gelagert, die bei auf die Tastatur 1 aufgesetztem Betätigungsgerät 10 etwa parallel zur Symmetrielinie S2 verläuft. Symmetrisch zur Symmetrielinie S2 weist das zweite Betätigungsglied 34 zwei Arme 35 auf, die zur Betätigung der Cursortasten 7 und 9 dienen. Von der Oberseite des zweiten Betätigungsglieds 34 erstreckt sich ein Fortsatz 36 senkrecht nach oben, auf den ein Griff 38 aufgeschoben ist, um den Hebel 20 zu bilden. Der Griff 38 ist, wie es in Fig. 2 zu sehen ist, im Querschnitt etwa oval ausgebildet, wobei die ovale Längsachse etwa parallel zur Symmetrielinie S1 verläuft. Die Oberseite des Griffs 38 steigt nach der Art eines Steuerknüppels nach hinten (in Fig. 2 nach links) schräg an und dient als Fingerauflage, in der Regel als Zeigefingerauflage.

In der erhöhten Tragplatte 26 sind vier Bohrungen 40, 41, 42, 43 vorgesehen, die so zueinander angeordnet sind, daß sie bei auf die Tastatur 1 aufgesetztem Betätigungsgerät senkrecht mittig über den Cursortasten 6, 7, 8 bzw. 9 liegen. Die Bohrungen 40-43 haben generell einen kreisförmigen Querschnitt mit zwei sich gegenüberliegenden Längsnuten. Im Bereich zwischen den Längsnuten ist auf der Oberseite der Tragplatte 26 ein jeweiliger hochstehender Rand 44-47 vorgesehen. An der Unterseite der Tragplatte 26 ist der Querschnitt der Bohrungen 40-43 erweitert, um einen Schraubenkopf aufnehmen zu können, was nachstehend noch erläutert wird.

In die Bohrungen 40-43 sind jeweils Stößel 48 eingeführt, die mit (nicht dargestellten) Längsnasen versehen sind, die in die Längsnuten der Bohrungen 40-43 greifen, um ein Verdrehen gegenüber den Bohrungen 40-43 zu verhindern. Die Stößel 48 sind jeweils mit einer mit einem Innengewinde versehenen Durchgangsbohrung in Hubrichtung versehen. An der Oberseite, d.h. den Armen 33 bzw. 35 zugewandt, sind die Stößel 48 mit einem etwa kreisförmigen Flansch versehen. Zwischen dem Flansch der Stößel 48 und der Oberseite der Tragplatte 26 sind jeweils Federn 50 vorgesehen, die um den jeweiligen hochstehenden Rand 44-47 herum angeordnet sind und von diesem zentriert werden.

Von der Unterseite, also von der Ausnehmung 28 aus, sind Schrauben 52 in die Gewindebohrungen der Stößel 48 eingeschraubt, deren Köpfe jeweils in die Erweiterungen der Bohrungen 40-43 passen. Daher kann die Höhe 29 der Ausnehmung 28 minimiert werden auf den Wert der maximalen Höhe der Cursortasten von Standardtastaturen (10,0 mm). Bei auf die Tastatur 1 aufgesetztem Betätigungsgerät liegen die Köpfe der Schrauben 52 jeweils genau mittig über den Cursortasten 6-9. Zur Einstellung des Stößelhubs und damit eines präzisen Anschlags der Cursortasten 6-9 werden die Schrauben 52 vom Anwender so weit in die Gewindebohrungen der Stößel 48 geschraubt, daß die Köpfe der Schrauben 52 in der Nullage des Hebels 20 genau auf den Cursortasten 6-9 aufliegen. Die Schrauben 52 können ohne Beeinträchtigung der Funktion des Betätigungsgerätes 10 so weit in die Gewindebohrungen der Stößel 48 hineingeschraubt werden, daß das Ende gegenüber dem jeweiligen Flansch vorsteht. Zu diesem Zweck sind die Arme 35 des zweiten Betätigungsgliedes 34 mit etwa dreieckförmigen Durchbrechungen 54 versehen. Die Arme 33 des ersten Betätigungsgliedes 32 reichen lediglich bis zu dem dem ersten Betätigungsglied 32 zugewandten Teil des hochstehenden Rands 44 bzw. 46. Daher treten auch die Arme 33 nicht mit den Enden der Schrauben 52 in Berührung.

An der Innenseite des Deckels können über den Bohrungen 40, 42 Stifte (nicht dargestellt) vorgesehen sein, die verhindern, daß die zugeordneten Stößel 48 aus den Bohrungen 40, 42 herausfallen, wenn die Schrauben 52 aus diesen Stößeln herausgeschraubt sind.

Zur Betätigung der Cursortasten 6-9 wird der Hebel 20 bewegt. Ein Verschwenken des Hebels nach hinten (nach links in Fig. 2) führt zu einer Betätigung der Cursortaste 9. Ein Verschwenken nach vorne führt zur Betätigung der Cursortaste 7. Ein Verschwenken nach links (aus der Zeichnungsebene von Fig. 2 heraus) führt zu einer Betätigung der Cursortaste 6. Eine Verschwenkung nach rechts führt zu einer Betätigung der Cursortaste 8. Kombinationen dieser Schwenkbewegungen des Hebels führen zur gleichzeitigen Betätigung der Cursortasten 6 und 9, 8 und 9, 6 und 7 oder 7 und 8.

Bei den Schwenkbewegungen des Hebels drücken die Enden der jeweiligen Arme 33, 35 die Stößel 48 in ihren Bohrungen 40-43 gegen die Federkraft der Federn 50 nach unten, so daß die Köpfe der Schrauben 52 die Cursortasten 6-9 nach unten drücken und damit betätigen. Wie es in Fig. 3 zu sehen ist, haben die Arme 33 eine Länge b und die Arme 35 eine Länge c. Die Armlänge ist jeweils als die Länge des durch die Arme erzielten Hebels definiert. Bei einem tatsächlich realisierten Ausführungsbeispiel beträgt der Wert b = 16,5 mm und der Wert c = 14 mm. Die Länge der Arme 33, 35 ist daher weitgehend aneinander angeglichen, so daß sich die Tasten 6 und 8 durch eine etwa gleich große Auslenkung des Hebels 20 betätigen lassen wie die Tasten 7 und 9. Dabei greifen die Arme 33 an einem dem Rahmen 32 zugewandten Randabschnitt der Flansche der Stößel 48 an, wohingegen die Arme 35 an einem Randabschnitt der Flansche der Stößel 48 angreifen, der von einer zentralen Achse S3 abgewandt ist, wie es in Fig. 2 bei dem links gezeigten Stößel 48 zu sehen ist. Um ein Verkanten der den Cursortasten 7 und 9 zugeordneten Stößel 48 zu vermeiden, kann an der Unterseite des zweiten Betätigungsglieds 34 ein Ansatz 56 vorgesehen sein, so daß die Arme 35 des zweiten Betätigungsgliedes 34 zusammen mit dem Ansatz 56 gleichmäßig auf die Stößel 48 drücken, wie es ebenfalls in Fig. 2 gezeigt ist.

In den Figuren 4 und 5 ist eine zweite Ausführungsform des erfindungsgemäßen Betätigungsgerätes generell mit der Bezugsziffer 80 versehen. Das Betätigungsgerät 80 weist ein Gehäuse 81 mit einer zentralen Öffnung auf, in der ein Hebel 84 mittels einer Gummimuffe 82 gelagert ist. Am unteren Ende des Hebels 84 ist ein kreuzförmiges Betätigungsglied 86 angebracht, dessen Armlängen entsprechend zu der ersten Ausführungsform mit b und c bezeichnet sind.

Zum Betätigen der Cursortasten 6-9 wird der Hebel 84 ähnlich wie bei der ersten Ausführungsform verschwenkt, so daß die Arme des kreuzförmigen Betätigungsgliedes 86 eine oder zwei der Cursortasten 6-9 gleichzeitig niederdrücken. Durch Angleichung der Armlängen b und c wird auch bei dieser Ausführungsform erreicht, daß der Betrag der Auslenkung des Hebels 84 zur Betätigung jeder der vier Cursortasten etwa gleich groß ist.

## Patentansprüche

1. Gerät (10; 80) zur Betätigung der T-förmig angeordneten Cursortasten (6-9) einer Tastatur (1) mittels eines Hebels (20; 84), mit
- einem Gehäuse (12; 81), aus dem sich der Hebel (20; 84) erstreckt, und
- einer an dem Gehäuse (12; 81) gelagerten und mit dem Hebel (20; 84) verbundenen Betätigungseinrichtung (32-35, 48-52; 86) zur Umsetzung von Hebelbewegungen in Betätigungen der Cursortasten (6-9), wobei die Betätigungseinrichtung (32-35, 48-52; 86) vier den Cursortasten (6-9) zugeordnete Arme (33, 35) aufweist,
dadurch gekennzeichnet, daß
die Betätigungseinrichtung (32-35, 48-52; 86) so ausgebildet ist, daß der Betrag der Auslenkung des Hebels (20; 84) zur Betätigung jeder der vier Cursortasten (6-9) etwa gleich ist.

2. Betätigungsgerät nach Anspruch 1, dadurch gekennzeichnet, daß die Cursortasten (6-9) ein erstes Paar (7, 9) benachbarter Cursortasten und ein zweites Paar (6, 8) von Cursortasten aufweisen, die durch eine (7) der Cursortasten des ersten Paars (7, 9) voneinander getrennt sind, und daß die Betätigungseinrichtung (32-35, 48-52; 86) zwei Arme (33) aufweist, die sich bis zu einem jeweiligen Randabschnitt des zweiten Paars von Cursortasten (6, 8) benachbart der einen Taste (7) des ersten Cursortastenpaars (7, 9) erstrecken.

3. Betätigungsgerät nach Anspruch 1 oder 2, dadurch gekennzeichnet, daß die Cursortasten (6-9) ein erstes Paar (7, 9) benachbarter Cursortasten und ein zweites Paar (6, 8) von Cursortasten aufweisen, die durch eine (7) der Cursortasten des ersten Paars (7, 9) voneinander getrennt sind, und daß die Betätigungseinrichtung (32-35, 48-52; 86) zwei Arme (35) aufweist, die sich bis zu einem jeweiligen Randabschnitt des ersten Cursortastenpaars (7, 9) entfernt von der jeweiligen anderen Cursortaste des ersten Cursortastenpaars (7, 9) erstrecken.

4. Betätigungsgerät nach Anspruch 3, dadurch gekennzeichnet, daß die dem zweiten Cursortastenpaar (6, 8) zugeordneten Arme (33) der Betätigungseinrichtung (32-35, 48-52; 86) maximal 35 %, vorzugsweise maximal 20 %, länger sind als die dem ersten Cursortastenpaar (7, 9) zugeordneten Arme (35).

5. Betätigungsgerät nach einem der Ansprüche 1 bis 4, dadurch gekennzeichnet, daß die Betätigungseinrichtung (32-35, 48-52) ein erstes, um eine erste Achse schwenkbares Betätigungsglied (32) und ein zweites, an dem ersten Betätigungsglied (32) um eine zweite, zur ersten Achse im wesentlichen senkrecht ausgerichtete Achse schwenkbar gelagertes Betätigungsglied (34) aufweist.

6. Betätigungsgerät nach Anspruch 5, dadurch gekennzeichnet, daß der Hebel (20) mit dem zweiten Betätigungsglied (34) starr verbunden ist.

7. Betätigungsgerät nach einem der Ansprüche 1 bis 6, dadurch gekennzeichnet, daß die Betätigungseinrichtung (32-35, 48-52) eine Stößeleinrichtung (48-50) mit vier, den Cursortasten (6-9) zugeordneten, etwa parallel zur Tastenbetätigungsrichtung beweglich an dem Gehäuse (12) gelagerten Stößeln (48) aufweist, die von den Armen (33, 35) bewegbar sind.

8. Betätigungsgerät nach Anspruch 7, dadurch gekennzeichnet, daß die Stößel (48) zueinander so angeordnet sind, daß sie jeweils mittig mit den Cursortasten (6-9) ausgerichtet sind.

9. Betätigungsgerät nach Anspruch 7 oder 8, dadurch gekennzeichnet, daß die Stößel (48) gegen die Cursortastenbetätigungsrichtung federvorgespannt sind.

10. Betätigungsgerät nach einem der Ansprüche 7 bis 9, dadurch gekennzeichnet, daß die Stößel (48) auf der den Armen (33, 35) zugewandten Seite flach ausgebildet sind.

11. Betätigungsgerät nach einem der Ansprüche 7 bis 10, dadurch gekennzeichnet, daß die Stößel (48) mit einer Bohrung mit Innengewinde versehen sind, in das Schrauben (52) zur Justierung des Stößelhubs eingeschraubt sind.

12. Betätigungsgerät nach Anspruch 11, dadurch gekennzeichnet, daß die Stößel (48) mit Durchgangsbohrungen zur Aufnahme der Schrauben (52) versehen sind.

13. Betätigungsgerät nach Anspruch 12, dadurch gekennzeichnet, daß die dem ersten Cursortastenpaar (7, 9) zugeordneten Arme (35) mit Durchbrechungen (54) versehen sind, die mit den Durchgangsbohrungen der zugehörigen Stößel (48) ausgerichtet sind.

14. Betätigungsgerät nach Anspruch 12 oder 13, dadurch gekennzeichnet, daß die dem zweiten Cursortastenpaar (6, 8) zugeordneten Arme (33) sich nicht über die Durchgangsbohrungen der zugehörigen Stößel (48) erstrecken.

15. Betätigungsgerät nach einem der Ansprüche 1 bis 14, dadurch gekennzeichnet, daß das Gehäuse ein auf der Tastatur (1) aufliegendes Bodenteil (14) und einen auf dieses aufsetzbaren Deckel (16) aufweist, der das Bodenteil (14) rastend übergreift.

16. Betätigungsgerät nach Anspruch 15, dadurch gekennzeichnet, daß das Bodenteil (14) Vertiefungen (58) zur Aufnahme von Mitteln zur Befestigung des Gerätes (10) an der Tastatur (1) aufweist.

17. Betätigungsgerät nach einem der Ansprüche 1 bis 16, dadurch gekennzeichnet, daß der Hebel (20) mit einem Griff (38) versehen ist, der im Querschnitt länglich ausgebildet ist, und daß der Griff (38) so an dem Hebel (20) angebracht ist, daß seine Längsachse etwa parallel zur Verbindungslinie (S1) des benachbart zueinander angeordneten ersten Cursortastenpaars (7, 9) ausgerichtet ist.

18. Betätigungsgerät nach einem der Ansprüche 1 bis 4, dadurch gekennzeichnet, daß die Betätigungseinrichtung (86) ein kreuzförmiges Betätigungsglied (86) aufweist, das starr mit dem Hebel (84) verbunden ist, und daß der Hebel (84) und damit das Betätigungsglied (86) schwenkbar an dem Gehäuse (81) gelagert ist.

19. Betätigungsgerät nach Anspruch 18, dadurch gekennzeichnet, daß der Hebel (84) an dem Gehäuse (81) durch eine elastische Muffe (82) gelagert ist.
